# EUROPÄISCHE PATENTSCHRIFT

(11) **EP 3 771 387 B1**
(45) Veröffentlichungstag und Bekanntmachung des Hinweises auf die Patenterteilung: **11.09.2024**
(21) Anmeldenummer: 20183660.8
(22) Anmeldetag: 02.07.2020
(51) Int. Cl.: A47J 43/08, F16H 7/10

(54) **ANTRIEBSVORRICHTUNG FÜR EINE KÜCHENMASCHINE**
DRIVE DEVICE FOR A KITCHEN APPLIANCE
DISPOSITIF D'ENTRAÎNEMENT POUR UN ROBOT DE CUISINE

(30) Priorität: 30.07.2019 DE 102019211316
(43) Veröffentlichungstag der Anmeldung: 03.02.2021
(73) Patentinhaber: BSH Hausgeräte GmbH, 81739 München (DE)
(72) Erfinder: Slatinsek, Blaz, 3342 Gornji Grad (SI); Berzelak, Matej, 3334 Luce (SI); Brecko, Ales, 3000 Celje (SI); Kovacic, Peter, 3303 Gomilsko (SI); Rudez, Darko, 3230 Sentjur (SI)

(56) Entgegenhaltungen:
- EP-A1- 0 570 685
- CN-U- 205 647 170
- DE-U1- 8 423 479
- US-A- 4 113 188
- US-A- 4 600 155
- US-A1- 2019 014 948

## Beschreibung

### Gebiet der Erfindung

Die Erfindung betrifft Antriebsvorrichtung für eine Küchenmaschine, aufweisend einen elektrischen Motor, und ein Planetengetriebe, vorzugsweise mit Riemenantrieb.

### Hintergrund der Erfindung

Der Betrieb von Küchenmaschinen mit einem Rühr- und Zerkleinerungswerk ist häufig mit einer nicht unerheblichen Geräuschentwicklung verbunden, wobei der Lärmpegel eine für den privaten Haushalt unzumutbare Höhe annehmen kann.

Ein großer Anteil wird beim Zerkleinern durch das Mahlgeräusch erzeugt. Ein nicht unerheblicher Anteil des Lärms wird aber auch durch den Antrieb, das Getriebe und die Ableitung der Motorvibrationen in das Gehäuse erzeugt. Der hierdurch entstehende Geräuschanteil zeigt sich beim Rühren, bei dem das Kochgut in der Küchenmaschine in der Regel keine Geräusche erzeugt.

Um hohe Drehmomente zum Kneten und zum Zerkleinern an das Rührwerk weiterzuleiten, werden in der Regel metallische Getriebe eingesetzt, welche die erforderlichen Drehmomente übertragen können. Um Kosten zu sparen, wird dabei häufig auf Getriebe mit nicht evolventenverzahnten Stirnrädern zurückgegriffen.

Um die Geräuschentwicklung zu minimieren, werden häufig solche Antriebsmotoren eingesetzt, deren Drehmoment gerade eben ausreicht, um das erforderliche Drehmoment zum Rühren und zum Zerkleinern mit hoher Umdrehungszahl zu erreichen. Um die hohe Drehzahl zu erreichen, ohne dabei ein Übermaß an Vibrationen in das Gehäuse der Küchenmaschine abzuleiten, wird auch auf direktantriebe ohne Getriebe zurückgegriffen. Es besteht ein Kompromiss zwischen Kosten, Laustärkeentwicklung und Drehmoment. Ein idealer Antrieb ist kostengünstig, leise und drehmomentstark.

Die US-Patentschrift US 4 600 155 A offenbart eine Maschine zur Verarbeitung von Lebensmitteln mit einem Behälter, dessen Position auf einem Trägersockel durch einen aus dem Behälter herausragenden Finger bestimmt wird, der in eine Aufnahme im Trägersockel eingreift. Der Sockel ist Teil eines Gehäuses, in dem ein Antriebsmotor angeordnet ist, der eine vertikal in den Behälter ragende Welle antreibt und entsprechende Messer trägt. Der Behälter ist durch eine abnehmbare Abdeckung abgedeckt und es sind Verriegelungen vorgesehen um zu verhindern, dass der Antriebsmotor gestartet wird, wenn der Behälter nicht korrekt positioniert ist, die abnehmbare Abdeckung über dem Behälter verriegelt und in geeigneter Weise relativ zum Behälter positioniert ist.

Aus der EP 0 570 685 A1 ist eine Vielzweckküchenmaschine bekannt, die aus einem Elektromotor, über dessen Antriebswelle zwei in einer Achse gelagerte und mit unterschiedlichen Drehzahlen sich drehende Abtriebswellen angetrieben werden, besteht. Sowohl die Antriebswelle als auch beide Abtriebswellen weisen entsprechende Riemenscheiben auf, die über je einen Riemen in Drehverbindung stehen. Die Riemenspannung zwischen der Antriebswelle und der ersten Abtriebswelle erfolgt durch eine relative Parallelverschiebung zwischen der Antriebswelle und der gemeinsamen Achse und der anschließenden Fixierung in der die notwendige Riemenspannung abgebenden Lage. Dabei erfolgt die Riemenspannung zwischen der Antriebswelle und der zweiten Abtriebswelle durch einen die Führung des zweiten Riemens umlenkenden Riemenspanner.

Die US-Patentschrift US 4 113 188 A offenbart eine Küchenmaschine enthaltend ein Gehäuse mit einer Motorkammer, die neben einer Lebensmittelverarbeitungsschüssel angeordnet ist, wodurch die Gesamthöhe des Geräts erheblich verringert wird. Ein Deckel ist abnehmbar an der Schüssel befestigt und betätigt bei richtiger Position einen Motorsteuerschalter am Gehäuse, wodurch der Motor ein in der Schüssel angeordnetes Werkzeug drehen kann.

### Der Erfindung zugrundeliegende Aufgabe

Aufgabe der Erfindung ist es daher, eine verbesserte Antriebseinrichtung für eine Küchenmaschine zur Verfügung zu stellen, insbesondere eine Antriebsvorrichtung, die kostengünstig ist, leiser ist als Küchenmaschinen aus dem Stand der Technik und die dennoch ein hohes Drehmoment liefert.

### Erfindungsgemäße Lösung

Die Bezugszeichen in sämtlichen Ansprüchen haben keine einschränkende Wirkung, sondern sollen lediglich deren Lesbarkeit verbessern.

Die erfindungsgemäße Aufgabe wird dadurch gelöst durch eine Antriebsvorrichtung für eine Küchenmaschine mit den Merkmalen nach Anspruch 1. Vorteilhafte Aus- und Weiterbildungen, welche einzeln oder in Kombination miteinander eingesetzt werden können, sind Gegenstand der abhängigen Ansprüche und der nachfolgenden Beschreibung.

Nach dem Gedanken der Erfindung ist eine mehrteilige Antriebsvorrichtung vorgesehen. Diese Antriebsvorrichtung für eine Küchenmaschine weist einen neben dem Koch-, Knet- oder Rührtopf aufrechtstehenden Motor mit vertikaler Antriebswelle / vertikalem Motorschaft auf. Dieser leitet sein Drehmoment in die Rührwelle der Küchenmaschine über ein Planetengetriebe und einen Zahnriementrieb. Dabei ist vorgesehen, dass der Rotor des elektrischen Motors über den Motorschaft in das Planetengetriebe reicht. Ein Montageschlitten dient als Fundament für den elektrisch betriebenen Motor und das Planetengetriebe. Die Anordnung ist platziert auf einer eine Grundplatte, wobei der Montageschlitten auf der Grundplatte verschieblich und fixierbar angeordnet ist. Die verschiebliche Anordnung hat zum Zweck, dass der Zahnriemen optimal gespannt werden kann. Ein Zahnriemen, der zu stark gespannt ist, neigt zu vergrößerten Verlusten und erzeugt somit auch eine starke Geräuschentwicklung. Ein optimal gespannter Zahnriemen kann hingegen geräuscharm Drehmoment von einer Zahnriemenscheibe zur nächsten weiterleiten.

In der Antriebsvorrichtung für eine Küchenmaschine ist des Weiteren vorgesehen, dass die Abtriebswelle des Planetengetriebes bis unterhalb der Grundplatte reicht und dort eine erste Zahnriemenscheibe aufweist. Neben dieser Abtriebswelle des Planetengetriebes ist eine von der Position des Montageschlittens entfernte Abtriebswelle mit Kupplung für ein Rührwerk vorhanden. Diese entfernte Abtriebswelle ist parallel zur Umdrehungsachse des elektrischen Motors angeordnet ist, und die entfernte Abtriebswelle weist eine zweite Zahnriemenscheibe auf. Diese zweite Zahnriemenscheibe ist in der gleichen Ebene angeordnet, wie die erste Zahnriemenscheibe der Abtriebswelle des Planetengetriebes und beide Zahnriemenscheiben sind über einen Zahnriemen miteinander verbunden.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

Der Aufbau mit unmittelbar am Motorschaft angebundenem Planetengetriebe und mit Zahnriemenscheibe, die über einen Zahnriemen mit der Abtriebswelle für das Rührwerk verbunden ist, ermöglicht einen geräuscharmen Lauf bei gleichzeitig hohem Drehmoment.

Zum leichten Spannen des Zahnriemens kann vorgesehen sein, dass der Montageschlitten in Richtung der Verbindungsachse zwischen den beiden Zahnriemenscheiben verschieblich angeordnet ist. Dabei kann der Montageschlitten über eine Spannschraube innerhalb der Grenzen von Langlöchern in der Grundplatte zum Fixieren verschiebbar sein, wobei die Spannschraube den Montageschlitten in Richtung entlang der Verbindungsachse zwischen den beiden Zahnriemenscheiben verschiebt.

In Ausgestaltung der erfindungsgemäßen Antriebsvorrichtung für eine Küchenmaschine kann vorgesehen sein, dass das Planetengetriebe über einen Flansch (am Getriebegehäuse fest mit dem Montageschlitten verbunden ist, wobei auf der Oberseite des Getriebegehäuses, die dem Montageschlitten gegenüber positioniert ist, der elektrisch betriebene Motor positioniert ist. Der Montageschlitten dient somit als Fundament für den Motor und das Planetengetriebe, die beide vormontiert werden können und zum Vereinen der Motor- und Getriebeeinheit mit der Grundplatte leicht miteinander verbunden werden können. In weiterer vorteilhafter Antriebsvorrichtung für eine Küchenmaschine kann vorgesehen sein, dass der Schaft des elektrischen Motors in das Planetengetriebe reicht und als Sonnenrad des Planetengetriebes ein helikale Verzahnung aufweist und mit den Planetenrädern des Planetengetriebes kämmt. Der Schaft des Motors ist somit gleichzeitig ein antreibendes Zahnrad und besteht aus Metall. Die Zahnräder des Planetengetriebes können dabei auch aus Kunststoff gefertigt werden. Durch das Ineinandergreifen von Metall und Kunststoff wird eine hohe Geräuschentwicklung unterbunden. Um das Drehmoment der Abtriebswelle des Planetengetriebes auf das Rührwerk zu übertragen, kann vorgesehen sein, dass die beiden Zahnriemenscheiben einen gleichen Durchmesser haben und im Betrieb die beiden über den Zahnriemen verbundenen Zahnriemenscheiben ein Übersetzungsverhältnis von eins aufweisen. Die beiden zahnriemenscheiben sind also gleich groß und die einander gegenüberliegenden Riemensegmente des hinlaufenden Riementeils und des rücklaufenden Riementeils verlaufen parallel zueinander.

Für ein einfaches Montieren der Antriebsvorrichtung für eine Küchenmaschine kann die folgende Vorgehensweise vorgesehen sein: Zunächst ein Positionieren einer mit der entfernten Abtriebswelle ausgestatteten Grundplatte, welche bereits mit der zweiten Zahnriemenscheibe ausgerüstet ist, in eine Haltevorrichtung einer Montagevorrichtung. Darauffolgend ein Einsetzen eines elektrischen betriebenen Motors, dessen Schaft mit helikaler Verzahnung als Sonnenrad in ein Planetengetriebe reicht, und wobei das Planetengetriebe mit einem Flansch auf einem Montageschlitten befestigt ist, in eine Aussparung der Grundplatte, wobei eine an der Abtriebswelle des Planetengetriebes montierte, erste Zahnriemenscheibe unterhalb der Grundplatte hervorragt. Diese Zusammenstellung wird so dann wie folgt weiter zusammengebaut: Vorzugsweise wird der Motor mitsamt Getriebe in Richtung der Verbindungsachse verschoben; weil am Deckel des Planetengetriebes Rippen integriert sind und korrespondierende Rippen an der Grundplatte vorgesehen sind, kommt es zu einer Überdeckung zwischen Rippen an der Grundplatte und Rippen am Deckel, sodass die Zusammensetzung in Richtung der Umdrehungsachse eindeutig beschränkt ist. Es folgt ein Einsetzen eines Zahnriemens über die beiden Zahnriemenscheiben, Spannen einer Spannschraube, welche den Montageschlitten von der entfernten Abtriebswelle entfernt, bis der Zahnriemengespannt ist. Anschließend erfolgt das Spannen der Spannschraube, das zu dem Zeitpunkt beendet wird, bei dem der Zahnriemen unter einer seitlichen Krafteinwirkung zwischen beiden Zahnriemenscheiben von 2 N bis 3 N um 2 mm bis 8 mm nachgibt. Die Zahnriemenspannung kann durch eine Federwaage oder durch einen Schubstock mit einem Kraftsensor gemessen werden. Für eine sehr exakte Vorspannung kann vorgesehen sein, die Zahnriemenspannung so durch Spannen einzustellen, dass bei 2,5 N der Zahnriemen um 4 mm nachgibt.

Nachdem der Zahnriemengespannt ist, ist es vorteilhaft, die Stellung des Montageschlittens nicht allein durch die Spannschraube zu kontrollieren und zu fixieren, sondern durch ein anschließendes Fixieren des Montageschlittens durch Anziehen der mindestens zwei Fixierschrauben den Langlöchern, die bis in die Grundplatte reichen. Die Spannung der Spannschraube und der Fixierschrauben kann schließlich durch Schrauben- oder Gewindelack 'festgehalten werden.

Die Antriebsvorrichtung kann eine der Hauptquellen von Vibrationen in einer Küchenmaschine sein. In einer bevorzugten Ausführung der erfindungsgemäßen Antriebsvorrichtung weist einen Puffer, z. B. einen im Querschnitt H-förmigen Puffer, auf, der die Antriebsvorrichtung von dem Gehäuse der Küchenmaschine isoliert. Der Puffer ist vorzugsweise aus Polyurethan hergestellt oder umfasst Polyurethan, Es ist ein erreichbarer Vorteil des Polyurethanmaterials, insbesondere im Vergleich zu anderen Materialien wie z. B. EPDM, dass es das Gehäuse weniger stark auf Vibrationen des Antriebs reagiert. Eine Ursache dafür kann die besondere Dichte des Polyurethanmaterials im Vergleich zu EPDM sein.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt:
- Fig. 1: eine Skizze der erfindungsgemäßen Antriebsvorrichtung für eine Küchenmaschine in einer perspektivischen Ansicht,
- Fig. 2: eine Skizze der der Antriebsvorrichtung für eine Küchenmaschine in einer perspektivischen Ansicht, wobei die Motor- und Getriebeeinheit von der Grundplatte gelöst ist,
- Fig. 3: einen senkrechten Schnitt durch die erfindungsgemäße Antriebsvorrichtung für eine Küchenmaschine,
- Fig. 4: eine Skizze der erfindungsgemäßen Antriebsvorrichtung für eine Küchenmaschine in einer Ansicht von unten auf die beiden Zahnriemenscheiben und den Zahnriemen,

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

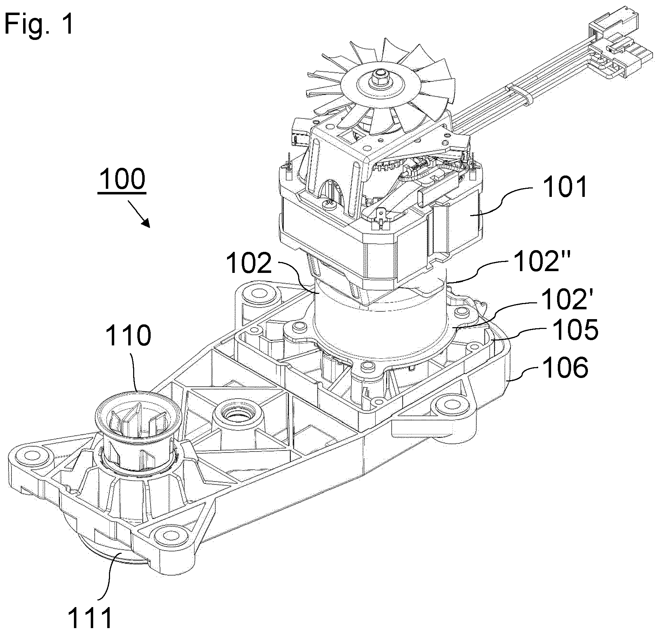

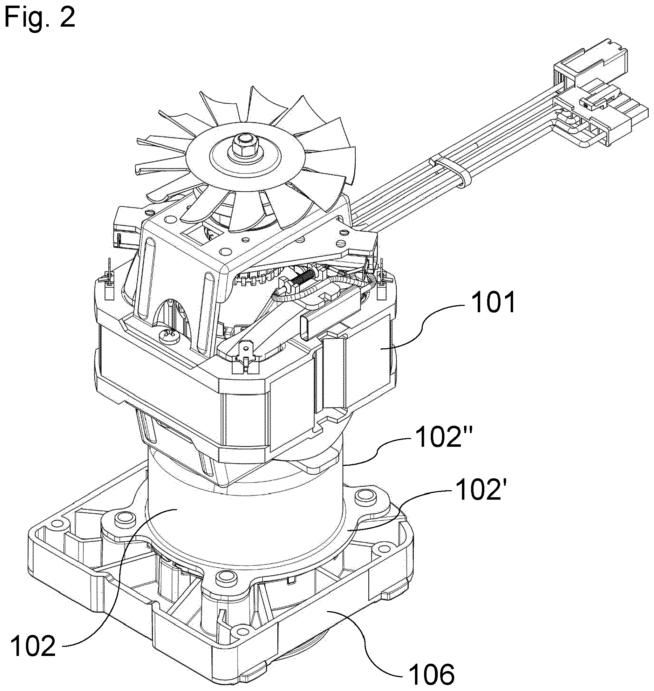

In **Figur 1** ist eine Skizze der erfindungsgemäßen Antriebsvorrichtung 100 für eine Küchenmaschine in einer perspektivischen Ansicht dargestellt. Diese Antriebsvorrichtung 100 weist auf einen elektrischen Motor 101 und ein Planetengetriebe 102, wobei der in dieser Figur nicht sichtbare Rotor 103 des elektrischen Motors 101 über den Motorschaft 104 in das Planetengetriebe 102 reicht. Der elektrische Motor 101 und das Planetengetriebe 102 sind unmittelbar miteinander verbunden und auf einem Montageschlitten 105 montiert, der als Fundament für den elektrisch betriebenen Motor (101) und das Planetengetriebe (102) dient. Die vereinzelte Einheit von Motor 101, Planetengetriebe 102 und Montageschlitten 105 sind in Figur 2 näher erläutert.

In dieser Figur ist diese Einheit auf eine Grundplatte 106 moniert, unterhalb derer sich noch weitere Elemente befinden. Der Montageschlitten 105 ist auf der Grundplatte 106 verschieblich und fixierbar angeordnet. Die Verschiebbarkeit ermöglicht es, den unterhalb der Grundplatte vorhandenen Zahnriemen zu spannen

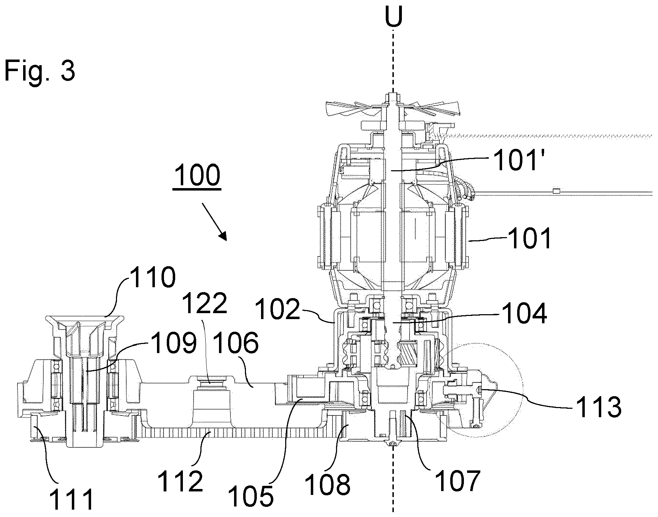

Im Vordergrund der Skizze ist dargestellt, dass eine von der Position des Montageschlittens 105 entfernte Abtriebswelle 109 mit Kupplung 110 für ein Rührwerk, vorhanden ist, wobei die entfernte Abtriebswelle 109 parallel zur Umdrehungsachse U (siehe Figur 3) des elektrischen Motors 101 angeordnet ist. Unterhalb der Grundplatte 106 weist die entfernte Abtriebswelle 109) eine zweite Zahnriemenscheibe 111 auf, die in der gleichen Ebene angeordnet ist, wie die erste Zahnriemenscheibe 108 der hier verdeckten Abtriebswelle 107 des Planetengetriebes, die auch unterhalb der Grundplatte angeordnet ist.

Die vereinzelte Einheit aus elektrischem Motor 101, Planetengetriebe 102 und Montageplatte 105 ist in der folgenden Figur, Figur 2 dargestellt.

In **Figur 2** ist gezeigt, wie der elektrische Motor 101 auf dem Getriebegehäuse 102" des Planetengetriebes 102 aufsitzt. Das Planetengetriebe 102 ist wiederum mit der Grundplatte 106 über einen Flansch 102' fest verschraubt, so dass die Grundplatte 106 mit dem Planetengetriebegehäuse 102" fest verbunden ist. Diese drei Elemente, nämlich der elektrische Motor 101, das Planetengetriebe 102 und der Montageschlitten können als einzelne Einheit an anderer Stelle vormontiert werden und diese Einheit kann als Ganzes in den Zusammenbauprozess verbaut werden.

In **Figur 3** ist schließlich ein senkrechter Schnitt in der Vertikaleben durch die erfindungsgemäße Antriebsvorrichtung 100 für eine Küchenmaschine gezeigt. In der Mitte des elektrischen Motors 101 befindet sich der Schaft 101' den Motorschaft 104 übergeht, der als Sonnenrad mit Helikalverzahnung in das Planetengetriebe 102 ragt. Die Abtriebswellse 107 des Planetengetriebes 102 ist wiederum unmittelbar mit einem Zahnriemenscheibe 108 verbunden, der über einen Zahnriemen 112 eine entfernte Zahnriemenscheibe 111 antreibt. Das Drehmoment der Zahnriemenscheibe 111 wird wiederum auf die Abtriebswelle 109 übertragen, die am oberen Ende eine Kupplung 110 für ein Rühr- oder Mahlwerk aufweist.

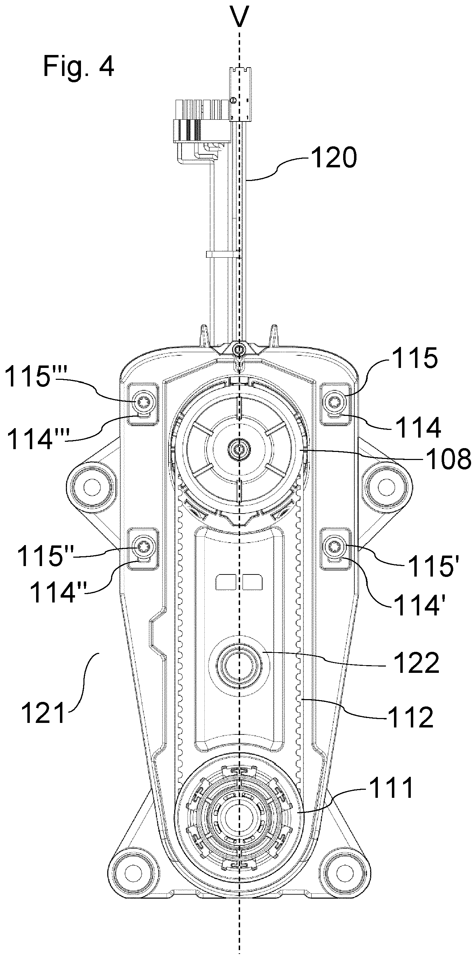

In Figur 3 sowie in **Figur 4** ist auch ein Puffer 122 dargestellt, der in Draufsicht rund und im Querschnitt H-förmig ist. Der Puffer besteht aus Polyurethan und dient der Vibrationsisolation der Antriebsvorrichtung gegenüber dem Küchenmaschinengehäuse.

Zur Montage wird die Einheit aus Figur 2 mitsamt dem Montageschlitten 105 auf die Grundplatte 106 gesetzt und mit Hilfe der Spannschraube 113 zurückgezogen, wodurch sich der Zahnriemen 112 spannt, der die Zahnriemenscheibe 108 und auch die Zahnriemenscheibe 111 umschließt.

Zur Verdeutlichung des Einbauverfahrens wird in Figur 4 ein Blick auf die Unterseite der Grundplatte 106 mit montiertem Zahnriemen und Einheit aus elektrischem Motor 101, Planetengetriebe 102 und Zahnriemenscheibe 108 gezeigt. Die Zahnriemenscheibe 108, die mit dem Planetengetriebe 102 verbunden ist, ragt durch eine Ausnehmung in der Grundplatte 106 heraus und wird von einem Zahnriemen 112 umschlossen. Zum Spannen des Zahnriemens 112 wird eine Spannschraube 113 (Sichtbar in Figur 3) mit Hilfe eines Werkzeuges 120 gedreht, so dass der Montageschlitten 105 in den Grenzen der Langlöcher 114, 114', 114"* und 114‴ entlang der Verbindungsachse V zwischen den beiden Zahnriemenscheiben 108 und 11 verschoben wird, wobei sich der Zahnriemen 112 spannt. Durch eine Schubstange 121 wird während des Einbaus die Spannung des Zahnriemens 112 geprüft. Die Spannschraube 113 wird so lange angezogen, bis die Spannung des Zahnriemens 112 der Schubstange 121 etwa 4mm Weg frei gibt, wenn die Schubstange 121 mit einer Kraft von 2,5 N seitlich auf den gespannten Zahnriemen 112 drückt.

Die Antriebsvorrichtung ist kostengünstig, leiser ist als Küchenmaschinen aus dem Stand der Technik und liefert dennoch ein hohes Drehmoment.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

### BEZUGSZEICHENLISTE

| | | | |
|---|---|---|---|
| 100 | Antriebsvorrichtung | 113 | Spannschraube |
| 101 | Motor | 114 | Langloch |
| 101' | Schaft | 114' | Langloch |
| 102 | Planetengetriebe | 114" | Langloch |
| 102' | Flansch | 114‴ | Langloch |
| 102" | Getriebegehäuse | 115 | Fixierschraube |
| 103 | Rotor | 115' | Fixierschraube |
| 104 | Motorschaft | 115" | Fixierschraube |
| 105 | Montageschlitten | 115‴ | Fixierschraube |
| 106 | Grundplatte | 120 | Werkzeug |
| 107 | Abtriebswelle | 121 | Schubstange |
| 108 | Zahnriemenscheibe | 122 | Puffer |
| 109 | Abtriebswelle | U | Umdrehungsachse |
| 110 | Kupplung | V | Verbindungsachse |
| 111 | Zahnriemenscheibe | | |
| 112 | Zahnriemen | | |

Diese Bezugszeichen in sämtlichen Ansprüchen haben keine einschränkende Wirkung, sondern sollen lediglich deren Lesbarkeit verbessern.

## Patentansprüche

1. Antriebsvorrichtung (100) für eine Küchenmaschine, aufweisend
- einen elektrischen Motor (101), und
- ein Planetengetriebe (102), wobei der Rotor (103) des elektrischen Motors (101) über den Motorschaft (104) in das Planetengetriebe (102) reicht,
- ein Montageschlitten (105), der als Fundament für den elektrisch betriebenen Motor (101) und das Planetengetriebe (102) dient, und
- eine Grundplatte (106), wobei der Montageschlitten (105) auf der Grundplatte (106) verschieblich und fixierbar angeordnet ist,
wobei die Abtriebswelle (107) des Planetengetriebes (102) bis unterhalb der Grundplatte (106) reicht und dort eine erste Zahnriemenscheibe (108) aufweist,
- eine von der Position des Montageschlittens (105) entfernte Abtriebswelle (109) mit Kupplung (110) für ein Rührwerk, wobei die entfernte Abtriebswelle (109) parallel zur Umdrehungsachse (U) des elektrischen Motors (101) angeordnet ist, und wobei die entfernte Abtriebswelle (109) eine zweite Zahnriemenscheibe (111) aufweist, die in der gleichen Ebene angeordnet ist, wie die erste Zahnriemenscheibe (108) der Abtriebswelle (107) des Planetengetriebes (102) und beide Zahnriemenscheiben (108, 111) über einen Zahnriemen (112) miteinander verbunden sind,
- wobei der Schaft (101') des elektrischen Motors (101) in das Planetengetriebe (102) reicht und als Sonnenrad des Planetengetriebes (102) ein helikale Verzahnung aufweist und mit den Planetenrädern des Planetengetriebes (102) kämmt,
- wobei der Schaft des Motors (101) und das Sonnenrad aus Metall bestehen und die Planetenräder aus Kunststoff gefertigt sind, und
- die beiden Zahnriemenscheiben (108, 111) einen gleichen Durchmesser haben und im Betrieb die beiden über den Zahnriemen (112) verbundenen Zahnriemenscheiben (108, 111) ein Übersetzungsverhältnis von eins aufweisen.

2. Antriebsvorrichtung nach Anspruch 1,
**dadurch gekennzeichnet, dass**
der Montageschlitten (105) in Richtung der Verbindungsachse (V) zwischen den beiden Zahnriemenscheiben (108, 111) verschieblich angeordnet ist.

3. Antriebsvorrichtung nach einem der Ansprüche 1 oder 2,
**dadurch gekennzeichnet, dass**
der Montageschlitten (105) über eine Spannschraube (113) innerhalb der Grenzen von Langlöchern (114, 114', 114", 114‴) in der Grundplatte (106) zum Fixieren verschiebbar ist, wobei die Spannschraube (113) den Montageschlitten (105) in Richtung entlang der Verbindungsachse (V) zwischen den beiden Zahnriemenscheiben (108, 111) verschiebt.

4. Antriebsvorrichtung nach einem der Ansprüche 1 bis 3,
**dadurch gekennzeichnet, dass**
das Planetengetriebe (102) über einen Flansch (102') am Getriebegehäuse (102") fest mit dem Montageschlitten (105) verbunden ist, wobei auf der Oberseite des Getriebegehäuses (102"), die dem Montageschlitten (105) gegenüber positioniert ist, der elektrisch betriebene Motor (101) positioniert ist.

5. Antriebsvorrichtung nach einem der vorhergehenden Ansprüche,
**dadurch gekennzeichnet, dass**
die Antriebsvorrichtung einen Puffer (122) aufweist, der die Antriebsvorrichtung von dem Gehäuse der Küchenmaschine isoliert.

6. Antriebsvorrichtung nach Anspruch 5,
**dadurch gekennzeichnet, dass**
der Puffer aus Polyurethan hergestellt ist oder umfasst Polyurethan,

7. Antriebsvorrichtung nach Anspruch 5 oder 6,
**dadurch gekennzeichnet, dass**
der Puffer in Draufsicht rund und im Querschnitt H-förmig ist

## Claims

1. Drive device (100) for a kitchen appliance having
- an electric motor (101) and
- a planetary gear system (102), wherein the rotor (103) of the electric motor (101) extends via the motor shaft (104) into the planetary gear system (102),
- an assembly slide (105) which serves as a base for the electrically operated motor (101) and the planetary gear system (102) and
- a base plate (106), wherein the assembly slide (105) is arranged in a displaceable and fixable manner on the base plate (106),
wherein the output shaft (107) of the planetary gear system (102) extends below the base plate (106) and has a first toothed belt pulley (108) at that point,
- an output shaft (109) which is remote from the position of the assembly slide (105) with a coupling (110) for a mixing tool, wherein the remote output shaft (109) is arranged parallel to the axis of rotation (U) of the electric motor (101) and wherein the remote output shaft (109) has a second toothed belt pulley (111) which is arranged in the same plane as the first toothed belt pulley (108) of the output shaft (107) of the planetary gear system (102) and the two toothed belt pulleys (108, 111) are connected together via a toothed belt (112),
- wherein the shaft (101') of the electric motor (101) extends into the planetary gear system (102) and as a sun gear of the planetary gear system (102) has a helical toothing and meshes with the planet gears of the planetary gear system (102),
- wherein the shaft of the motor (101) and the sun gear consist of metal and the planet gears are produced from plastic, and
- the two toothed belt pulleys (108, 111) have the same diameter and during operation the two toothed belt pulleys (108, 111) which are connected via the toothed belt (112) have a transmission ratio of one.

2. Drive device according to claim 1,
**characterised in that**
the assembly slide (105) is arranged in the direction of the connecting axis (V) in a displaceable manner between the two toothed belt pulleys (108, 111).

3. Drive device according to one of claims 1 or 2,
**characterised in that**
the assembly slide (105) is displaceable via a tensioning screw (113) within the limits of slots (114, 114', 114", 114‴) in the base plate (106), wherein the tensioning screw (113) displaces the assembly slide (105) in the direction along the connecting axis (V) between the two toothed belt pulleys (108, 111).

4. Drive device according to one of claims 1 to 3,
**characterised in that**
the planetary gear system (102) is fixedly connected to the assembly slide (105) via a flange (102') on the gearbox housing (102"), wherein the electrically operated motor (101) is positioned on the upper face of the gearbox housing (102") which is positioned opposite the assembly slide (105).

5. Drive device according to one of the preceding claims,
**characterised in that**
the drive device has a cushioning element (122) which isolates the drive device from the housing of the kitchen appliance.

6. Drive device according to claim 5,
**characterised in that**
the cushioning element is manufactured from polyurethane or comprises polyurethane.

7. Drive device according to claim 5 or 6,
**characterised in that**
the cushioning element is round in plan view and H-shaped in cross section.

## Revendications

1. Dispositif d'entraînement (100) pour un robot de cuisine, présentant
- un moteur électrique (101), et
- un engrenage épicycloïdal (102), dans lequel le rotor (103) du moteur électrique (101) s'étend dans l'engrenage épicycloïdal (102) à travers l'arbre du moteur (104),
- un chariot de montage (105), qui sert de base pour le moteur à actionnement électrique (101) et l'engrenage épicycloïdal (102), et
- une plaque de base (106), dans lequel le chariot de montage (105) est disposé de façon mobile et pouvant être fixé sur la plaque de base (106), dans lequel l'arbre de sortie (107) de l'engrenage épicycloïdal (102) s'étend jusque sous la plaque de base (106) et présente à cet endroit une première poulie dentée (108),
- un arbre de sortie (109) éloigné de la position du chariot de montage (105) avec accouplement (110) pour un agitateur, dans lequel l'arbre de sortie éloigné (109) est disposé parallèlement à l'axe de rotation (U) du moteur électrique (101), et dans lequel l'arbre de sortie éloigné (109) présente une deuxième poulie dentée (111), disposée dans le même plan que la première poulie dentée (108) de l'arbre de sortie (107) de l'engrenage épicycloïdal (102) et les deux poulies dentées (108, 111) sont reliées l'une à l'autre via une courroie crantée (112),
- dans lequel l'arbre (101') du moteur électrique (101) s'étend dans l'engrenage épicycloïdal (102) et présente sous forme de roue solaire de l'engrenage épicycloïdal (102) une denture hélicoïdale et s'engrène avec les roues planétaires de l'engrenage épicycloïdal (102),
- dans lequel l'arbre du moteur (101) et la roue solaire sont en métal et les roues planétaires sont fabriquées en plastique, et
- les deux poulies dentées (108, 111) ont un diamètre identique et les deux poulies dentées (108, 111) reliées via la courroie crantée (112) présentent en fonctionnement un rapport de transmission d'un.

2. Dispositif d'entraînement selon la revendication 1, **caractérisé en ce que** le chariot de montage (105) est disposé en direction de l'axe de liaison (V) de façon mobile entre les deux poulies dentées (108, 111).

3. Dispositif d'entraînement selon l'une des revendications 1 ou 2, **caractérisé en ce que** le chariot de montage (105) est déplaçable via un tendeur (113) dans les limites de trous oblongs (114, 114, 114", 114‴) dans la plaque de base (106) pour la fixation, dans lequel le tendeur (113) déplace le chariot de montage (105) en direction le long de l'axe de liaison (V) entre les deux poulies dentées (108, 111).

4. Dispositif d'entraînement selon l'une des revendications 1 à 3, **caractérisé en ce que** l'engrenage épicycloïdal (102) est relié fermement au chariot de montage (105) via un flasque (102') sur le carter d'engrenages (102"), dans lequel le moteur à actionnement électrique (101) est positionné sur le côté supérieur du carter d'engrenages (102") qui est positionné face au chariot de montage (105).

5. Dispositif d'entraînement selon l'une des revendications précédentes, **caractérisé en ce que** le dispositif d'entraînement présente un butoir (122), qui isole le dispositif d'entraînement du carter du robot de cuisine.

6. Dispositif d'entraînement selon la revendication 5, **caractérisé en ce que** le butoir est fabriqué en polyuréthane ou comprend du polyuréthane.

7. Dispositif d'entraînement selon la revendication 5 ou 6, **caractérisé en ce que** vu du dessus, le butoir est rond et présente une section en forme de H.
